# EUROPÄISCHE PATENTSCHRIFT

(11) **EP 4 071 013 B1**
(45) Veröffentlichungstag und Bekanntmachung des Hinweises auf die Patenterteilung: **09.08.2023**
(21) Anmeldenummer: 22167124.1
(22) Anmeldetag: 07.04.2022
(51) Int. Cl.: B60T 11/10, B60T 8/36

(54) **INTEGRATION VON BETRIEBSBREMSE, FESTSTELLBREMSE UND KIPPSICHERUNG**
INTEGRATION OF SERVICE BRAKE, PARKING BRAKE AND ANTI-TILT DEVICE
INTÉGRATION DU FREIN DE SERVICE, FREIN DE STATIONNEMENT ET PROTECTION CONTRE LE BASCULEMENT

(30) Priorität: 08.04.2021 DE 102021203459
(43) Veröffentlichungstag der Anmeldung: 12.10.2022
(73) Patentinhaber: ZF Friedrichshafen AG, 88046 Friedrichshafen (DE)
(72) Erfinder: Kern, Heinrich, 72072 Tübingen (DE); Lauhoff, Jakob, 72070 Tübingen (DE)

(56) Entgegenhaltungen:
- CN-U- 206 860 570
- CN-U- 206 871 054
- CN-U- 208 900 435
- DE-A1-102011 011 630
- JP-A- 2015 128 986
- US-A1- 2010 074 764
- US-A1- 2017 361 822
- US-A1- 2018 320 588

## Beschreibung

Die Erfindung betrifft eine Anordnung nach dem Oberbegriff von Anspruch 1, ein Verfahren nach Anspruch 8, ein Steuergerät nach Anspruch 9 und ein Computerprogramm nach Anspruch 10.

Aus dem Stand der Technik sind mehrspurige Fahrzeuge mit einem um eine Längsachse verschwenkbaren Aufbau bekannt. Derartige Fahrzeuge werden etwa in den Druckschriften EP 2 729 351 A1, EP 3 272 561 A1, EP 2 300 308 A1,

DE 10 2006 022 134 A1, EP 1 362 779 A2, EP 1 870 269 A1, US 2008 238 005 A2 und EP 0 876 263 A1 beschrieben. Ein Neigemechanismus des jeweiligen Fahrzeugs lässt sich blockieren, um das Fahrzeug im Stillstand zu stabilisieren und zu verhindern, dass es umfällt. Zum Aktivieren des Mechanismus ist ein entsprechendes Bedienelement vorgesehen. Auch ist es möglich, den Mechanismus automatisch zu aktivieren, wenn das Fahrzeug zum Stillstand kommt. Eine Parkbremse muss dabei separat betätigt und gelöst werden. CN 206 871 054 U offenbart eine Anordnung mit einem hydraulischen Geber, einem ersten und einem zweiten hydraulischen Nehmer, einem ersten und einem zweiten Rückschlagventil.

Der Erfindung liegt die Aufgabe zugrunde, die Betätigung einer Betriebsbremse, einer Parkbremse und eines Feststellmittels zum Blockieren eines Neigungsmechanismus eines mehrspurigen Fahrzeugs gegenüber dem Stand der Technik zu verbessern. Diese Aufgabe wird gelöst durch eine Anordnung nach Anspruch 1, ein Verfahren nach Anspruch 8, ein Steuergerät nach Anspruch 9 und ein Computerprogramm nach Anspruch 10. Bevorzugte Weiterbildungen sind in den Unteransprüchen enthalten und ergeben sich aus nachfolgender Beschreibung.

Die Anordnung umfasst einen Geberzylinder, einen ersten Nehmerzylinder und einen zweiten Nehmerzylinder. Geberzylinder und Nehmerzylinder sind hydraulische oder pneumatische Arbeitszylinder, die mit einem Arbeitsfluid betrieben werden. Der Geberzylinder dient dazu, das Arbeitsfluid mit Druckenergie zu beaufschlagen. Die Energie wird dem Nehmerzylinder über das Arbeitsfluid zugeführt. Dier Nehmerzylinder wandelt die Energie in mechanische Energie, vorzugsweise in eine Linearbewegung.

Erfindungsgemäß umfasst die Anordnung ein erstes Rückschlagventil und ein zweites Rückschlagventil. Rückschlagventile, auch Rückschlagarmaturen genannt, sind Mittel, die das Arbeitsfluid jeweils nur in eine Richtung - die Durchlassrichtung - strömen lassen. Entgegengesetzt zur Durchlassrichtung sperrt ein Rückschlagventil das Arbeitsfluid, sodass das Arbeitsfluid in Rückschlagrichtung nicht strömen kann. Ein Rückschlagventil weist einen Eingang und einen Ausgang auf. Das Arbeitsfluid kann von dem Eingang in Richtung des Ausgangs strömen. Eine Strömung des Arbeitsfluids von dem Ausgang in Richtung des Eingangs sperrt das Rückschlagventil.

Die Anordnung weist darüber hinaus ein 3/2-Wegeventil auf. Dies ist ein Wegeventil mit drei Anschlüssen - einem ersten Anschluss, einem zweiten Anschluss und einem dritten Anschluss - und zwei Schaltstellungen. Befindet sich das 3/2-Wegeventil in einer ersten Schaltstellung, sind der erste Anschluss und der zweite Anschluss fluidleitend miteinander verbunden. Der dritte Anschluss ist dabei isoliert. Dies bedeutet, dass weder zwischen dem dritten Anschluss und dem ersten Anschluss noch zwischen dem dritten Anschluss und dem zweiten Anschluss eine fluidleitende Verbindung besteht.

Befindet sich das 3/2-Wegeventil in einer zweiten Schaltstellung, sind der zweite Anschluss und der dritte Anschluss fluidleitend miteinander verbunden. Der erste Anschluss ist dann isoliert, sodass weder zwischen dem ersten Anschluss und dem zweiten Anschluss noch zwischen dem ersten Anschluss und dem dritten Anschluss eine fluidleitende Verbindung besteht.

Sind zwei Elemente fluidleitend miteinander verbunden, besteht zwischen den Elementen eine fluidleitende Verbindung. Eine fluidleitende Verbindung zeichnet sich dadurch aus, dass sie ein mit einem Überdruck beaufschlagtes Fluid leitet. Insbesondere ist eine fluidleitende Verbindung überdruckleitend, das heißt ausgebildet, den Überdruck, mit dem das Fluid beaufschlagt ist, zu leiten. Mit Überdruck wird ein Druck bezeichnet, der den Umgebungsdruck übersteigt. Innerhalb einer fluidleitenden Verbindung kann das Arbeitsfluid in beliebige Richtungen frei strömen. Insbesondere wird die Strömung des Fluids in keine Richtung gesperrt.

Die Anordnung umfasst mehrere fluidleitende Verbindungen. So sind der erste Anschluss des 3/2-Wegeventils, der Ausgang des ersten Rückschlagventils und der erste Nehmer über eine fluidleitende Verbindung fluid- und druckleitend miteinander verbunden. Über eine weitere fluidleitende Verbindung sind der Geber und der zweite Anschluss des 3/2-Wegeventils fluid- und druckleitend miteinander verbunden. Weiterhin verbindet eine fluidleitende Verbindung den dritten Anschluss des 3/2-Wegeventils und den Eingang des zweiten Rückschlagventils fluid- und druckleitend miteinander. Schließlich sind der Eingang des ersten Rückschlagventils, der Ausgang des zweiten Rückschlagventils und der zweite Nehmer über eine fluidleitende Verbindung fluid- und druckleitend miteinander verbunden.

Mittels der erfindungsgemäßen Anordnung lässt sich in bevorzugten Weiterbildungen eine Betriebsbremse und/oder ein Feststellmittel betätigen. Der erste Nehmer ist betätigungswirksam mit der Betriebsbremse verbunden, sodass die Betriebsbremse über den ersten Nehmer betätigt werden kann. Der Nehmer ist also ausgebildet, die Betriebsbremse zu schließen und so eine Bremskraft aufzubringen. Vorzugsweise handelt es sich bei dem Nehmer um einen Bremskolben.

Das Feststellmittel dient dazu, den Neigemechanismus eines Fahrzeugs der eingangs genannten Art zu blockieren. Im blockierten Zustand ist die Neigung eines Aufbaus des Fahrzeugs bezüglich der Längsachse auch bei Einwirkung äußerer Kräfte unveränderlich.

Der zweite Nehmer ist betätigungswirksam mit dem Feststellmittel verbunden. Mittels des zweiten Nehmers lässt sich das Feststellmittel derart betätigen, sodass der Neigungsmechanismus blockiert.

Befindet sich das 3/2-Wegeventil in der ersten Schaltstellung, lässt sich die Betriebsbremse über die Zusammenwirkung von Geber und erstem Nehmer auf herkömmliche Weise betätigen. In dem das Arbeitsfluid über den Nehmer mit einem Druck beaufschlagt wird, wird die Betriebsbremse betätigt und so ein Bremsvorgang eingeleitet. Die Betriebsbremse bleibt so lange geschlossen, wie der über den Geber aufgebrachte Druck anliegt. Das erste Rückschlagventil verhindert dabei, dass der zweite Nehmer mit dem Druck beaufschlagt wird. Entfällt der Druck, löst sich die Betriebsbremse.

Über die zweite Schaltstellung des 3/2-Wegeventils lässt sich eine Halte- und Parkfunktion realisieren. Befindet sich das 3/2-Wegeventil in der zweiten Schaltstellung, wirkt der Geber über den ersten Nehmer und den zweiten Nehmer sowohl auf die Betriebsbremse als auch auf das Feststellmittel. Fällt der Druck, mit dem der Geber das Arbeitsfluid beaufschlagt, ab, werden die Rückschlagventile in Sperrrichtung beaufschlagt. Infolgedessen bleibt der auf den ersten Nehmer und den zweiten Nehmer wirkende Fluiddruck erhalten. Die Betriebsbremse wirkt dann als eine Parkbremse. Gleichzeitig blockiert das Feststellmittel den Neigemechanismus und verhindert, dass das Fahrzeug umkippt.

Wird das 3/2-Wegeventil zurück in die erste Schaltstellung überführt, baut sich der Druck, mit dem der erste Nehmer und der zweite Nehmer beaufschlagt sind, über die fluidleitende Verbindung zwischen dem ersten Anschlusses und dem zweiten Anschluss in Richtung des Gebers ab. Das erste Rückschlagventil wird dabei in Durchlassrichtung beaufschlagt.

In einer bevorzugten Weiterbildung umfasst die Anordnung ein Bedienelement zum Betätigen des Nehmers. Bei dem Bedienelement handelt es sich vorzugsweise um einen Bremshebel oder ein Bremspedal.

Bevorzugt ist die Anordnung darüber hinaus mit einem Rückstellmechanismus weitergebildet, der das 3/2-Wegeventil mit einer Rückstellkraft beaufschlagt. Vorzugsweise wird das 3/2-Wegeventil permanent mit der Rückstellkraft beaufschlagt. Die Rückstellkraft bewirkt eine Überführung des 3/2-Wegeventils von der ersten Schaltstellung in die zweite Schaltstellung.

Durch Verwendung eines ausfallsicheren Rückstellmechanismus lässt sich erreichen, dass die Anordnung im Fehlerfall einen sicheren Zustand einnimmt. So wird weiterbildungsgemäß im Fehlerfall durch den Rückstellmechanismus die Halte- und Parkfunktion aktiviert. Dadurch wird verhindert, dass das Fahrzeug im Fehlerfall umkippt oder unkontrolliert wegrollt. Als Rückstellmechanismus eignet sich etwa ein Federelement, insbesondere eine mechanische Feder.

Gegen die Rückstellkraft des Rückstellmechanismus wirkt in einer bevorzugten Weiterbildung ein Aktor. Dies impliziert, dass sich das 3/2-Wegeventil mittels des Aktors von der zweiten Schaltstellung in die erste Schaltstellung überführen lässt. Der Aktor bringt dabei eine Kraft auf, die gegen die Rückstellkraft wirkt, das heißt die der Rückstellkraft entgegengerichtet ist, und die betragsmäßig größer als die Rückstellkraft ist. Vorzugsweise kommt ein elektromechanischer Aktor zum Einsatz. Bei einem Ausfall des Aktors wird die Anordnung, wie oben beschrieben, durch den Rückstellmechanismus in einen sicheren Zustand überführt.

Bevorzugt ist die Anordnung mit einem einstückig ausgeführten Block weiterbildet. Dieser bildet ein Gehäuse des ersten Rückschlagventils, ein Gehäuse des zweiten Rückschlagventils, ein Gehäuse des 3/2-Wegeventils, die fluidleitende Verbindung zwischen dem ersten Anschluss des 3/2-Wegeventils, dem Ausgang des ersten Rückschlagventils und dem ersten Nehmer, die fluidleitende Verbindung zwischen dem Geber und dem zweiten Anschluss des 3/2-Wegeventils, die fluidleitende Verbindung zwischen dem dritten Anschluss des 3/2-Wegeventils und dem Eingang des zweiten Rückschlagventils sowie die fluidleitende Verbindung zwischen dem Eingang des ersten Rückschlagventils, dem Ausgang des zweiten Rückschlagventils und dem zweiten Nehmer aus. Der weiterbildungsgemäße Ventil- und Leitungsblock zeichnet sich durch seine Einfachheit und Robustheit aus. Insbesondere lässt sich der Block kostengünstig fertigen.

Ein erfindungsgemäßes computerimplementiertes Verfahren dient zum Betrieb eines Fahrzeugs, vorzugsweise eines Fahrzeugs der eingangs beschriebenen Art. Das Fahrzeug weist eine erfindungsgemäße Anordnung oder eine bevorzugte Weiterbildung auf. Erfindungsgemäß wird die Fahrgeschwindigkeit des Fahrzeugs überwacht und mit einem vordefinierten Schwellwert verglichen. Unterschreitet die Fahrgeschwindigkeit den Schwellwert, wird das 3/2-Wegeventil der Anordnung von der ersten Schaltstellung in die zweite Schaltstellung überführt, sodass die Halte- und Parkfunktion aktiviert wird.

Die Überführung des 3/2-Wegeventils von der zweiten Schaltstellung in die erste Schaltstellung erfolgt vorzugsweise auf manuellem Wege. So kann das Fahrzeug etwa ein separates Bedienelement aufweisen, bei dessen Betätigung die Überführung von der zweiten Schaltstellung in die erste Schaltstellung erfolgt. Auch ist es möglich, das 3/2-Wegeventil von der zweiten Schaltstellung in die erste Schaltstellung in Abhängigkeit von der Betätigung eines Schaltelements zur Beschleunigung des Fahrzeugs, etwa eines Gasgriffs oder Gaspedals, zu überführen.

Ein erfindungsgemäßes Steuergerät implementiert das erfindungsgemäße Verfahren. Das Steuergerät ist also ausgebildet, ein Geschwindigkeitssignal eines Fahrzeugs, vorzugsweise eines Fahrzeugs der eingangs beschriebenen Art, das eine erfindungsgemäße Anordnung oder eine bevorzugte Weiterbildung aufweist, zu empfangen. Das Geschwindigkeitssignal wird von dem Steuergerät mit dem Schwellwert verglichen. Stellt das Steuergerät fest, dass das Geschwindigkeitssignal den Schwellwert unterschreitet, überführt das Steuergerät das 3/2-Wegeventil der Anordnung von der ersten Schaltstellung in die zweite Schaltstellung.

Ein erfindungsgemäßes Computerprogramm ist ausgebildet, ein Steuergerät zur Ausführung des erfindungsmäßen Verfahrens zu veranlassen, wenn das Computerprogramm auf dem Steuergerät ausgeführt wird. Ein Steuergerät, auf dem das erfindungsgemäße Computerprogramm gespeichert ist, ist eine Ausführungsform des erfindungsgemäßen Steuergeräts.

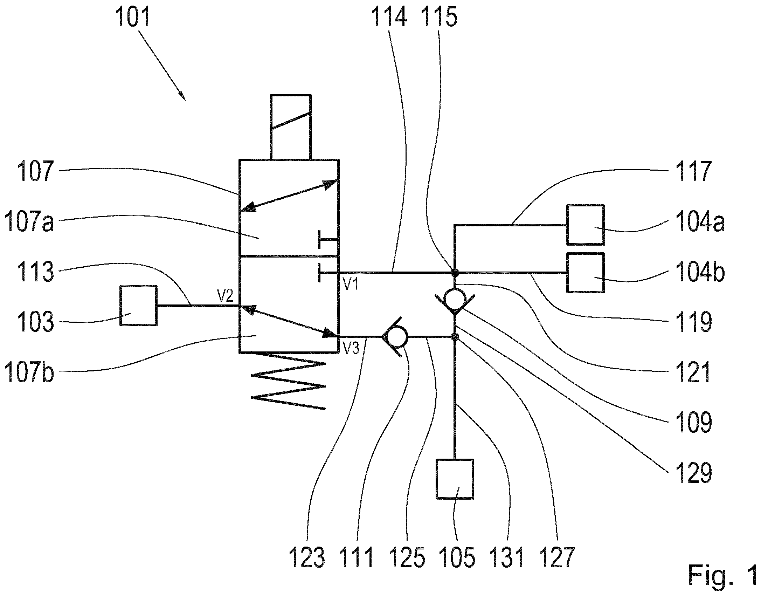

Ein bevorzugtes Ausführungsbeispiel der Erfindung ist in Figur 1 dargestellt. Im Einzelnen zeigt:
- Fig. 1: einen Hydraulikblock.

Der in Figur 1 dargestellte Hydraulikblock 101 ist fluidleitend mit einem Geberzylinder 103, einem Mittel 105 zur Neigungsfixierung, einer ersten Betriebsbremse 104a und einer zweiten Betriebsbremse 104b verbunden. Der Hydraulikblock 101 bildet ein 3/2-Wegeventil 107, ein erstes Rückschlagventil 109, ein zweites Rückschlagventil 111 und mehrere Hydraulikleitungen aus. Das 3/2-Wegeventil weist einen ersten Anschluss V1, einen zweiten Anschluss V2 und einen dritten Anschluss V3 auf.

Eine erste Hydraulikleitung 113 verbindet den Geberzylinder 103 mit dem zweiten Anschluss V2. Eine zweite Hydraulikleitung 114 verläuft von dem ersten Anschluss V1 zu einem ersten Verteiler 115. Eine dritte Hydraulikleitung 117 und eine vierte Hydraulikleitung 119 führen jeweils von dem ersten Verteiler 115 zu einer Betriebsbremse 104a, 104b. Eine fünfte Hydraulikleitung 121 verbindet den Verteiler 115 und das erste Rückschlagventil 109 miteinander. Über den ersten Verteiler 115 sind somit die zweite Hydraulikleitung 114, die dritte Hydraulikleitung 117, die vierte Hydraulikleitung 119 und die fünfte Hydraulikleitung 121 fluidleitend miteinander verbunden.

Eine sechste Hydraulikleitung 123 führt von dem dritten Anschluss V3 zu dem zweiten Rückschlagventil 111. Über eine siebte Hydraulikleitung 125 ist das zweite Rückschlagventil 111 mit einem zweiten Verteiler 127 verbunden. Weiterhin ist das erste Rückschlagventil 109 über eine achte Hydraulikleitung 129 mit dem zweiten Verteiler 127 verbunden. Eine neunte Hydraulikleitung 131 verbindet den zweiten Verteiler 127 mit dem Mittel 107 zur Neigungsfixierung. Über den zweiten Verteiler 127 sind somit die siebte Hydraulikleitung 125, die achte Hydraulikleitung 129 und die neunte Hydraulikleitung 131 fluidleitend miteinander verbunden.

Das erste Rückschlagventil 109 ist so ausgerichtet, dass es Hydraulikflüssigkeit von der achten Hydraulikleitung 129 in die fünfte Hydraulikleitung 121 strömen lässt. In Gegenrichtung sperrt das erste Hydraulikventil 109. Von der fünften Leitung 121 kann also keine Hydraulikflüssigkeit über das erste Rückschlagventil 109 in die achte Hydraulikleitung 129 strömen.

Das zweite Rückschlagventil 111 lässt Hydraulikflüssigkeit von der sechsten Hydraulikleitung 123 in die siebte Hydraulikleitung 125 strömen. In Gegenrichtung sperrt es, sodass keine Hydraulikflüssigkeit von der siebten Hydraulikleitung 125 in die sechste Hydraulikleitung 123 strömen kann.

Das 3/2-Wegeventil 107 besitzt zwei Schaltstellungen. In einer ersten Schaltstellung 107a sind der ersten Anschluss V1 und der zweiten Anschluss V2 fluidleitend miteinander verbunden. Der dritte Anschluss V3 ist in der ersten Schaltstellung 107a nicht fluidleitend mit einem anderen Anschluss des 3/2-Wegeventils 107 verbunden.

In einer zweiten Schaltstellung 107b sind der zweite Anschluss V2 und der dritte Anschluss V3 fluidleitend miteinander verbunden. Der erste Anschluss V1 ist in der zweiten Schaltstellung 107b nicht fluidleitend mit einem anderen Anschluss des 3/2-Wegeventils 107 verbunden.

Der Schaltmechanismus des 3/2-Wegeventils ist mit einer Federkraft beaufschlagt. Die Federkraft bewirkt, dass das 3/2-Wegeventil 107 in Ruheposition den zweiten Schaltzustand 107b einnimmt. Mittels eines elektromagnetischen Aktors lässt sich das 3/2-Wegeventil 107 von dem zweiten Schaltzustand 107b in den ersten Schaltzustand 107a überführen. Ist der elektromagnetische Aktor unbestromt, bewirkt die Federkraft, dass das 3/2-Wegeventil 107 von dem ersten Schaltzustand 107a in den zweiten Schaltzustand 107b zurückkehrt.

### Bezugszeichen

- 101: Hydraulikblock
- 103: Geberzylinder
- 105: Mittel zur Neigungsfixierung
- 104a: erste Betriebsbremse
- 104b: zweite Betriebsbremse
- 107: 3/2-Wegeventil
- 107a: erste Schaltstellung des 3/2-Wegeventils
- 107b: zweite Schaltstellung des 3/2-Wegeventils
- 109: erstes Rückschlagventil
- 111: zweites Rückschlagventil
- 113: erste Hydraulikleitung
- 114: zweite Hydraulikleitung
- 115: erster Verteiler
- 117: dritte Hydraulikleitung
- 119: vierte Hydraulikleitung
- 121: fünfte Hydraulikleitung
- 123: sechste Hydraulikleitung
- 125: siebte Hydraulikleitung
- 127: zweiter Verteiler
- 129: achte Hydraulikleitung
- 131: neunte Hydraulikleitung

## Patentansprüche

1. Anordnung mit einem hydraulischen Geber (103), einem hydraulischen ersten Nehmer (104a, 104b) und einem zweiten Nehmer (105);
einem ersten Rückschlagventil (109), einem zweiten Rückschlagventil (111), einem 3/2-Wegeventil (107), **gekennzeichnet durch**
eine fluidleitende Verbindung (114, 115, 117, 119, 121) zwischen einem ersten Anschluss (V1) des 3/2-Wegeventils (107), einem Ausgang des ersten Rückschlagventils (109) und dem ersten Nehmer (104a, 104b), eine fluidleitende Verbindung (113) zwischen dem Geber (103) und einem zweiten Anschluss (V2) des 3/2-Wegeventils (107), eine fluidleitende Verbindung (123) zwischen einem dritten Anschluss (V3) des 3/2-Wegeventils (107) und einem Eingang des zweiten Rückschlagventils (111), und eine fluidleitende Verbindung (125, 127, 129, 131) zwischen einem Eingang des ersten Rückschlagventils (109), einem Ausgang des zweiten Rückschlagventils (111) und dem zweiten Nehmer (105); wobei
der erste Anschluss (V1) und der zweite Anschluss (V2) in einer ersten Schaltstellung (107a) des 3/2-Wegeventils (107) fluidleitend miteinander verbunden sind, und wobei
der zweite Anschluss (V2) und der dritte Anschluss (V3) in einer zweiten Schaltstellung (107b) des 3/2-Wegeventils (107) fluidleitend miteinander verbunden sind.

2. Anordnung nach Anspruch 1; **gekennzeichnet durch**
eine Betriebsbremse; wobei
der erste Nehmer (104a, 104b) ausgebildet ist, die Betriebsbremse zu betätigen.

3. Anordnung nach einem der vorhergehenden Ansprüche; **gekennzeichnet durch** einen Feststellmittel zum Blockieren eines Neigemechanismus eines mehrspurigen Fahrzeugs; wobei
der zweite Nehmer (105) ausgebildet ist, das Feststellmittel zu betätigen.

4. Anordnung nach einem der vorhergehenden Ansprüche; **gekennzeichnet durch** ein Bedienelement zum Betätigen des Nehmers (105).

5. Anordnung nach einem der vorhergehenden Ansprüche; **gekennzeichnet durch** einen Rückstellmechanismus, der das 3/2-Wegeventil (107) mit einer Rückstellkraft beaufschlagt; wobei
die Rückstellkraft ein Überführung des 3/2-Wegeventil (107) von der ersten Schaltstellung (107a) in die zweite Schaltstellung (107b) bewirkt.

6. Anordnung nach dem vorhergehenden Anspruch; **gekennzeichnet durch** einen gegen die Rückstellkraft wirkenden Aktor.

7. Anordnung nach einem der vorhergehenden Ansprüche; **gekennzeichnet durch** einen einstückig ausgeführten Block, der ein Gehäuse des ersten Rückschlagventils (109), ein Gehäuse des zweite Rückschlagventils (111), ein Gehäuse des 3/2-Wegeventils (107) und die fluidleitenden Verbindungen (114, 115, 125, 117, 119, 121, 123,125, 127, 129, 131) ausbildet.

8. Computerimplementiertes Verfahren zum Betrieb eines Fahrzeugs, das eine Anordnung nach einem der vorhergehenden Ansprüche aufweist; **dadurch gekennzeichnet, dass**
das 3/2-Wegeventil (107) der Anordnung von der ersten Schaltstellung (107a) in die zweite Schaltstellung (107b) überführt wird, sobald die Fahrgeschwindigkeit des Fahrzeugs einen vordefinierten Schwellwert unterschreitet.

9. Steuergerät umfassend Mittel zur Ausführung des Verfahrens nach Anspruch 8 .

10. Computerprogramm, das ausgebildet ist, ein Steuergerät nach dem vorhergehenden Anspruch zur Ausführung eines Verfahrens nach dem Verfahrensanspruch zu veranlassen.

## Claims

1. Arrangement having a hydraulic master unit (103), a hydraulic first slave unit (104a, 104b) and a second slave unit (105); and having a first check valve (109), a second check valve (111) and a 3/2-way valve (107), **characterized by**
a fluid-conducting connection (114, 115, 117, 119, 121) between a first port (V1) of the 3/2-way valve (107), an outlet of the first check valve (109) and the first slave unit (104a, 104b), a fluid-conducting connection (113) between the master unit (103) and a second port (V2) of the 3/2-way valve (107), a fluid-conducting connection (123) between a third port (V3) of the 3/2-way valve (107) and an inlet of the second check valve (111), and a fluid-conducting connection (125, 127, 129, 131) between an inlet of the first check valve (109), an outlet of the second check valve (111) and the second slave unit (105); wherein,
in a first switching position (107a) of the 3/2-way valve (107), the first port (V1) and the second port (V2) are connected to one another in a fluid-conducting manner; and wherein,
in a second switching position (107b) of the 3/2-way valve (107), the second port (V2) and the third port (V3) are connected to one another in a fluid-conducting manner.

2. Arrangement according to Claim 1; **characterized by** a service brake; wherein
the first slave unit (104a, 104b) is configured to actuate the service brake.

3. Arrangement according to either of the preceding claims; **characterized by**
a locking means for blocking an inclination mechanism of a multi-track vehicle; wherein
the second slave unit (105) is configured to actuate the locking means.

4. Arrangement according to one of the preceding claims; **characterized by**
an operator-control element for actuating the slave unit (105) .

5. Arrangement according to one of the preceding claims; **characterized by**
a resetting mechanism which subjects the 3/2-way valve (107) to a resetting force; wherein
the resetting force causes the 3/2-way valve (107) to be transferred from the first switching position (107a) into the second switching position (107b).

6. Arrangement according to the preceding claim; **characterized by**
an actuator which acts counter to the resetting force.

7. Arrangement according to one of the preceding claims; **characterized by**
a block which is formed in one piece and which forms a housing of the first check valve (109), a housing of the second check valve (111), a housing of the 3/2-way valve (107), and the fluid-conducting connections (114, 115, 125, 117, 119, 121, 123, 125, 127, 129, 131).

8. Computer-implemented method for operating a vehicle which has an arrangement according to one of the preceding claims; **characterized in that**
the 3/2-way valve (107) of the arrangement is transferred from the first switching position (107a) into the second switching position (107b) as soon as the travelling speed of the vehicle falls below a predefined threshold value.

9. Control device comprising means for carrying out the method according to Claim 8.

10. Computer program configured to cause a control device according to the preceding claim to carry out a method according to the method claim.

## Revendications

1. Agencement comportant un émetteur hydraulique (103), un premier récepteur hydraulique (104a, 104b) et un deuxième récepteur (105) ; une première soupape anti-retour (109), une deuxième soupape anti-retour (111), une soupape à 3/2 voies (107), **caractérisé par**
une liaison fluidique (114, 115, 117, 119, 121) entre un premier raccordement (V1) de la soupape à 3/2 voies (107), une sortie de la première soupape anti-retour (109) et le premier récepteur (104a, 104b), une liaison fluidique (113) entre l'émetteur (103) et un deuxième raccordement (V2) de la soupape à 3/2 voies (107), une liaison fluidique (123) entre un troisième raccordement (V3) de la soupape à 3/2 voies (107) et une entrée de la deuxième soupape anti-retour (111), et une liaison fluidique (125, 127, 129, 131) entre une entrée de la première soupape anti-retour (109), une sortie de la deuxième soupape anti-retour (111) et le deuxième récepteur (105) ;
le premier raccordement (V1) et le deuxième raccordement (V2) étant en liaison fluidique l'un avec l'autre dans une première position de commutation (107a) de la soupape à 3/2 voies (107); et
le deuxième raccordement (V2) et le troisième raccordement (V3) étant en liaison fluidique l'un avec l'autre dans une deuxième position de commutation (107b) de la soupape à 3/2 voies (107).

2. Agencement selon la revendication 1 ; **caractérisé par**
un frein de service ;
le premier récepteur (104a, 104b) étant réalisé pour actionner le frein de service.

3. Agencement selon l'une des revendications précédentes ; **caractérisé par**
un moyen de verrouillage servant au blocage d'un mécanisme d'inclinaison d'un véhicule à plusieurs voies ;
le deuxième récepteur (105) étant réalisé pour actionner le moyen de verrouillage.

4. Agencement selon l'une des revendications précédentes ; **caractérisé par**
un élément de commande servant à l'actionnement du récepteur (105).

5. Agencement selon l'une des revendications précédentes ; **caractérisé par**
un mécanisme de rappel qui soumet la soupape à 3/2 voies (107) à une force de rappel ;
la force de rappel provoquant un transfert de la soupape à 3/2 voies (107) de la première position de commutation (107a) à la deuxième position de commutation (107b).

6. Agencement selon la revendication précédente ; **caractérisé par**
un actionneur agissant à l'encontre de la force de rappel.

7. Agencement selon l'une des revendications précédentes ; **caractérisé par**
un bloc réalisé d'une seule pièce, lequel forme un carter de la première soupape anti-retour (109), un carter de la deuxième soupape anti-retour (111), un carter de la soupape à 3/2 voies (107) et les liaisons fluidiques (114, 115, 117, 119, 121, 123, 125, 127, 129, 131).

8. Procédé implémenté sur ordinateur servant au fonctionnement d'un véhicule qui présente un agencement selon l'une des revendications précédentes ; **caractérisé en ce que**
la soupape à 3/2 voies (107) de l'agencement est transférée de la première position de commutation (107a) à la deuxième position de commutation (107b) dès que la vitesse de conduite du véhicule passe en dessous d'une valeur seuil prédéfinie.

9. Appareil de commande comprenant des moyens de mise en œuvre du procédé selon la revendication 8.

10. Programme informatique qui est réalisé pour amener un appareil de commande selon la revendication précédente à mettre en œuvre un procédé selon la revendication de procédé.
